# EUROPÄISCHE PATENTSCHRIFT

(11) **EP 3 957 161 B1**
(45) Veröffentlichungstag und Bekanntmachung des Hinweises auf die Patenterteilung: **18.10.2023**
(21) Anmeldenummer: 21202420.2
(22) Anmeldetag: 29.05.2019
(51) Int. Cl.: A01G 9/029, A01G 13/04, A01G 31/02

(54) **TRÄGERSTREIFEN ZUR SUBSTRATLOSEN GEMEINSAMEN BEWURZELUNG EINER VIELZAHL UNBEWURZELTER STECKLINGE**
STRIP FOR THE SUBSTRATE-LESS COMMON ROOTING OF A NUMBER OF UNROOTED CUTTINGS
RUBAN D'ENRACINEMENT COMMUN SANS SUBSTRAT D'UNE PLURALITÉ DE BOUTURES NON RACINÉES

(43) Veröffentlichungstag der Anmeldung: 23.02.2022
(62) Teilanmeldung aus: 19727678.5
(73) Patentinhaber: SELECTA KLEMM GMBH & CO. KG, 70378 Stuttgart (DE)
(72) Erfinder: Reiner, Stefan, 71563 Affalterbach (DE); Schimmelpfeng, Dirk, 71686 Remseck (DE); Klemm, Per, 70378 Stuttgart (DE)
(74) Vertreter: Beyer, Andreas

(56) Entgegenhaltungen:
- WO-A1-2013/154424
- CA-A1- 3 060 146
- US-A1- 2011 258 926

## Beschreibung

Die Bewurzelung von Stecklingen findet heutzutage im Rahmen der vegetativen Vermehrung von Zier- und Nutzpflanzen millionenfach statt. Üblicherweise werden die Stecklinge hierzu in ein feuchtes Substrat gesteckt, um darin Wurzeln auszubilden. Als Substrat kann beispielsweise Erde, Perlit, Vermiculit, Kokosbast, Steinwolle oder Blähtonpellets Verwendung finden. Üblicherweise werden die Stecklinge zunächst in kleinen Gefäßen angezogen und dann, nach Ausbildung erster Wurzeln, in größere Gefäße umgepflanzt, in denen sie später auch an die Kunden versandt werden. Bei den Kunden findet dann in wiederum anderen Behältern die weitere Aufzucht der Pflanzen bis zur Verkaufsreife statt.

Der beschriebene Prozess der Aufzucht von Stecklingen ist relativ langwierig und auch verlustbehaftet, da nicht alle Stecklinge sich wie gewünscht entwickeln. Gesucht wird daher nach Möglichkeiten, die zum einen den Aufwand bei der Stecklingsaufzucht verringern und zum anderen zu besseren Ergebnissen führen, wie z. B. zu größeren und stabileren Pflanzen und weniger Ausfall. Eine Vorrichtung zur Aufzucht von Stecklingen ist aus der US 2011/258926 A1 bekannt.

Zur Lösung des vorgenannten Problems stellt die vorliegende Erfindung einen Trägerstreifen mit den im Anspruch 1 angegebenen Merkmalen bereit. Ein solcher Trägerstreifen kann in einem Verfahren zur substratlosen gemeinsamen Bewurzelung einer Vielzahl unbewurzelter Stecklinge verwendet werden, welches folgende Schritte aufweist:
- Bereitstellen eines Trägerstreifens mit einer Vielzahl oben offener Kavitäten zur Aufnahme jeweils eines unbewurzelten Stecklings in jeder Kavität, wobei jede Kavität zumindest in einem einer Stecklingsbasis zugeordneten Bereich mit Öffnungen versehen ist,
- Einsetzen eines unbewurzelten Stecklings in jede Kavität,
- Anbringen einer wasserfesten, wasser- und luftdurchlässigen Klimamembran an dem mit den Stecklingen versehenen Trägerstreifen solchermaßen, dass zumindest der der Stecklingsbasis zugeordnete Bereich jeder Kavität des Trägerstreifens von der Klimamembran umschlossen ist,
- Anordnen des mit der Klimamembran versehenen Trägerstreifens in einer Bewurzelungsstation und Bewurzeln lassen der Stecklinge für einen vorgegebenen Zeitraum unter regelmäßiger Feuchtigkeitsbenebelung, und
- nach Ablauf der vorgegebenen Bewurzelungszeitdauer, Versenden des Trägerstreifens mit den bewurzelten Stecklingen zur Weiterverarbeitung oder Vereinzeln des Trägerstreifens in Abschnitte mit je zumindest einem bewurzelten Steckling und Versenden der Abschnitte zur Weiterverarbeitung.

Der erfindungsgemäß bereitgestellte Trägerstreifen ist vorzugsweise so ausgestaltet, dass jeder Steckling in der ihm zugeordneten Kavität des Trägerstreifens klemmend gehalten wird. Damit die weitere Entwicklung der Stecklinge möglichst gleichmäßig verläuft, sollten die verwendeten Stecklinge möglichst alle eine gleiche Größe und Reife haben. Als Trägerstreifen zur Verwendung in dem erfindungsgemäßen Verfahren eignet sich beispielsweise ein unter der Bezeichnung AutoStix^{™} angebotener Trägerstreifen der Firma Visser Horti Systems. Diese Trägerstreifen werden derzeit mit 34 oder 51 linear nebeneinander angeordneten Kavitäten angeboten. Trägerstreifen dieser Art sind dazu gedacht, mit Stecklingen bestückt und dann in ein Substrat eingebracht zu werden, damit die Stecklinge in dem Substrat kallusieren und/oder Wurzeln ausbilden.

Erfindungsgemäß findet diese Kallusierung und/oder Bewurzelung der Stecklinge jedoch ohne ein Substrat statt. Um dieses Ziel zu erreichen, wird an den mit Stecklingen bestückten Trägerstreifen zunächst eine wasserfeste, jedoch wasser- und luftdurchlässige Klimamembran solchermaßen angebracht, dass zumindest der der Stecklingsbasis zugeordnete Bereich jeder Kavität des Trägerstreifens von der Klimamembran umschlossen ist. Mit wasserfest ist hier gemeint, dass die Klimamembran sich in Wasser nicht auflöst bzw. unter Wassereinwirkung nicht zersetzt. Die Klimamembran kann papierartig (mit oder ohne Perforation), folienartig (insbesondere auch perforiert), gewebeartig oder vliesartig sein. Als Material für die Klimamembran kommen neben den zur Papierherstellung verwendeten Materialien auch Kunststoffe und Naturfasern in Betracht. Die Klimamembran kann auch aus einem Verbundwerkstoff bestehen.

Vorzugsweise besitzt die Klimamembran ein gewisses Flüssigkeitsaufnahme- bzw. speichervermögen, um auf diese Weise eine Pufferwirkung zu erreichen und eine Grundfeuchte um die Stecklingsbasen herum länger aufrechterhalten zu können. Anders ausgedrückt hat die Klimamembran vorzugsweise eine gewisse Saugfähigkeit, die beispielsweise mittels Zellstoff als Bestandteil der Klimamembran erreicht werden kann. Jedoch kommen als Flüssigkeitsspeicher auch andere Stoffe in Betracht, beispielsweise sogenannte Superabsorber sowie Kunststoff- oder Naturfasern. Im erfindungsgemäßen Verfahren bevorzugte Ausführungsformen der Klimamembran haben pro 100 g Trockengewicht der Klimamembran ein Flüssigkeitsaufnahmevermögen von mindestens 100 g Flüssigkeit, vorzugsweise von mindestens 200 g Flüssigkeit und besonders bevorzugt von mindestens 300 g Flüssigkeit. Dabei ist die Klimamembran vorzugsweise so ausgeführt, dass sie die entsprechende Flüssigkeitsmenge schnell aufnehmen kann, d.h. im Zeitraum von wenigen Sekunden bis zu höchstens wenigen Minuten, damit die im Wege der Feuchtigskeitsbenebelung zugeführte Flüssigkeit effektiv gespeichert werden kann.

Das Anbringen der Klimamembran an dem Trägerstreifen kann auf verschiedene Art und Weise erfolgen. Gemäß einer bevorzugten Ausgestaltung des Verfahrens wird die Klimamembran vor dem Anbringen an dem Trägerstreifen V-förmig gefaltet und dann von unten auf den Trägerstreifen aufgeschoben. Über den Trägerstreifen hinausstehende vordere und hintere Enden der Klimamembran werden dann so zusammengeheftet, dass die Klimamembran eng am Trägerstreifen anliegt. Alternativ und/oder zusätzlich kann der Trägerstreifen auf seiner Außenseite seitlich mehrere Haken aufweisen, in die die Klimamembran eingehängt werden kann. Die Haken können als Widerhaken ausgestaltet sein, um ein unbeabsichtigtes Lösen der Klimamembran von dem Trägerstreifen zu erschweren. Die Form der Klimamembran ist dem Trägerstreifen angepasst und somit vorzugsweise ebenfalls streifenförmig oder zumindest langgestreckt. Die genaue Gestalt und Befestigung der verwendeten Klimamembran ist nicht essentiell, es muss lediglich sichergestellt werden, dass die Klimamembran in dem am Trägerstreifen befestigten Zustand jedenfalls den Bereich des Trägerstreifens anliegend umgibt, der den Stecklingsbasen zugeordnet ist. Bei einer bevorzugten Ausgestaltung des Verfahrens reicht die Klimamembran in an dem Trägerstreifen angebrachten Zustand seitlich bis in den Bereich der Oberseite jeder Kavität des Trägerstreifens.

Die solchermaßen mit der Klimamembran versehenen Trägerstreifen werden dann in eine Bewurzelungsstation gebracht, in der die Stecklinge für einen vorgegebenen Zeitraum unter regelmäßiger Feuchtigkeitsbenebelung verbleiben, um zu bewurzeln. Dieser vorgegebene Zeitraum kann beispielsweise 2 bis 3 Wochen betragen. In der Bewurzelungsstation dient die Klimamembran zur Schaffung eines gleichförmigen Mikroklimas im Bereich der Stecklingsbasen, in dem die Bewurzelung stattfindet. Aufgrund ihrer Wasser- und Luftdurchlässigkeit hält die Klimamembran das Mikroklima an den Stecklingsbasen in einem zur Bewurzelung optimalen Bereich, indem die Klimamembran einerseits verhindert, dass die Stecklingsbasen in Flüssigkeit stehen, was ein Verfaulen begünstigen würde, und andererseits verhindert, dass die Stecklingsbasen austrocknen, was einer Bewurzelung der Stecklinge ebenfalls nicht förderlich wäre. Das Ausmaß der regelmäßigen Feuchtigkeitsbenebelung ist an die in den Trägerstreifen befindlichen Stecklinge angepasst, d. h. Stecklinge einer Pflanzenart oder -sorte, die mehr Wasser benötigt, werden häufiger mit Feuchtigkeit benebelt als Stecklinge einer Pflanzenart oder -sorte, die zur Bewurzelung nur wenig Feuchtigkeit benötigt.

Erfindungsgemäß ist ein Umsetzen der in den Trägerstreifen befindlichen Stecklinge in größere Behälter vor einem Versenden der bewurzelten Stecklinge an beispielsweise einen Kunden nicht mehr notwendig. Stattdessen sind die in den Trägerstreifen befindlichen Stecklinge nach Ablauf der vorgegebenen, je nach Pflanzenart oder - sorte unterschiedlichen Bewurzelungszeitdauer so gut bewurzelt, dass sie beispielsweise in den Trägerstreifen an Kunden versandt und beim Kunden unmittelbar in die der weiteren Aufzucht dienenden Behälter umgesetzt werden können.

Gemäß einer besonders bevorzugten Ausgestaltung des Verfahrens wird jeder mit unbewurzelten Stecklingen bestückte Trägerstreifen vor dem Anbringen der Klimamembran zunächst für eine vorgegebene Zeitdauer solchermaßen in eine Hormonlösung eingetaucht, dass die Stecklingsbasis jedes Stecklings sich in der Hormonlösung befindet. Die vorgegebene Zeitdauer, für die der mit Stecklingen versehene Trägerstreifen in die Hormonlösung eingetaucht wird, kann beispielsweise zwischen drei und acht Stunden betragen und beträgt vorzugsweise etwa sechs Stunden. Während der vorgegebenen Zeitdauer findet eine regelmäßige Feuchtigkeitsbenebelung der in den Trägerstreifen befindlichen Stecklinge statt, um deren Austrocknung zu verhindern.

Nach Ablauf der vorgegebenen Zeitdauer in der Hormonlösung wird wie bereits zuvor beschrieben die Klimamembran an jedem Trägerstreifen angebracht. Die Klimamembran absorbiert sodann einen Teil der sich an den Stecklingsbasen befindenden Hormonlösung und verhindert dadurch, dass die Hormonlösung während der anschließenden Feuchtigkeitsbenebelung in der Bewurzelungsstation zu schnell ausgewaschen wird. Mittels der Klimamembran wird somit die Einwirkungszeit der Hormonlösung im Bereich der Stecklingsbasen deutlich verlängert. Gleiches gilt für jede weitere während der Bewurzelung vorgenommene Behandlung wie etwa Düngung sowie biologische und fungizide Behandlungen. Gemäß einer alternativen Ausgestaltung des Verfahrens kann die Klimamembran am Trägerstreifen auch angebracht werden, bevor der mit den Stecklingen versehene Trägerstreifen für die vorgegebene Zeitdauer in eine Hormonlösung eingetaucht wird. In jedem Fall sorgt die Klimamembran während der anschließenden Bewurzelungsphase dafür, dass die Feuchtigkeit und das Mikroklima um die Stecklingsbasen herum für eine gleichmäßige Kallusierung und/oder Wurzelbildung optimal sind.

Vorzugsweise findet am Ende des in der Bewurzelungsstation erfolgenden Bewurzelungsprozesses ein Waschen der bewurzelten Stecklinge mit einer Mykorrhiza enthaltenden Lösung statt. Dies fördert eine Wurzelverzweigung und erhöht die Robustheit der bewurzelten Stecklinge.

Je nach der beim Kunden vorgesehenen, weiteren Verwendung der die nunmehr bewurzelten Stecklinge enthaltenden Trägerstreifen kann vor dem Schritt des Versendens die Klimamembran entfernt werden und es können sodann aus dem Trägerstreifen unten herausstehende Wurzeln abgeschnitten werden. Dies empfiehlt sich insbesondere dann, wenn die die bewurzelten Stecklinge enthaltenden Trägerstreifen maschinell weiterverarbeitet werden sollen, da unten aus dem Trägerstreifen hervorstehende Wurzeln beispielsweise dazu führen können, dass eine maschinelle Vereinzelungsvorrichtung blockiert. Beim Abschneiden der unten aus dem Trägerstreifen herausstehenden Wurzeln sollte darauf geachtet werden, dass eine Schädigung der Wurzeln minimiert ist, d. h. dass nur so viel abgeschnitten wird wie nötig und so wenig wie möglich. Das beschriebene Zurückschneiden der Wurzeln vor dem Versand hat den Vorteil, dass sich während des Transports zum Kunden die durch das Zurückschneiden erzeugten Wunden an den Wurzeln schließen und die Wurzeln sich neu verzweigen und Haarwurzeln ausbilden. Vorteilhaft ist ein Abschneiden der Wurzeln nahe der Wurzelbasis, da die Wurzelneuverzweigung und Haarwurzelbildung dann direkt am Wurzelansatz stattfindet. Für den Kunden ergeben sich aus dem Zurückschneiden der Wurzeln vor dem Versand deutliche Vorteile in Bezug auf ein gleichmäßigeres und problemloseres Anwachsen der bewurzelten Stecklinge in kürzerer Zeit. Insgesamt wird dadurch der Bestand homogener, Ausfälle werden geringer und die Kulturzeit (d. h. die Aufzuchtzeit bis zur Verkaufsreife) wird kürzer. Ohne das beschriebene Zurückschneiden der Wurzeln vor dem Versand befinden sich die meisten Haarwurzeln an oder nahe den Wurzelspitzen. Während eines Transports und einer anschließenden Weiterverarbeitung solcher Stecklinge mit nicht zurückgeschnittenen Wurzeln besteht die Gefahr, dass die Wurzelspitzen abbrechen, wodurch dann auch die sich an den Wurzelspitzen befindenden Haarwurzeln verloren gehen. Dieses Risiko wird durch das beschriebene Abschneiden der Wurzeln vor dem Versand deutlich reduziert und darüber hinaus können sich wie beschrieben während der Transportzeit neue Wurzelverzweigungen und Haarwurzeln nahe dem Wurzelansatz ausbilden, was zu den erläuterten Vorteilen führt.

Das zuvor beschriebene Zurückschneiden der Wurzeln vor einem Versand der in den Trägerstreifen befindlichen, bewurzelten Stecklinge hat auch ohne die vorherige Verwendung einer Klimamembran eine vorteilhafte Wirkung. Gemäß einem weiteren Aspekt ist die vorliegende Erfindung deshalb auch auf ein Verfahren zur substratlosen gemeinsamen Bewurzelung einer Vielzahl unbewurzelter Stecklinge mittels Trägerstreifen gerichtet, bei dem an den in den Trägerstreifen befindlichen, bewurzelten Stecklingen kurz vor oder nach ihrem Aufenthalt in der Bewurzelungsstation und vor einem Versand die unten aus dem Trägerstreifen herausstehenden Wurzeln abgeschnitten werden. Konkret kann ein solches Verfahren demnach die folgenden Schritte umfassen:
- Bereitstellen eines Trägerstreifens mit einer Vielzahl oben offener Kavitäten zur Aufnahme jeweils eines unbewurzelten Stecklings in jeder Kavität, wobei jede Kavität zumindest in einem einer Stecklingsbasis zugeordneten Bereich mit Öffnungen versehen ist,
- Einsetzen eines unbewurzelten Stecklings in jede Kavität,
- Anordnen des Trägerstreifens in einer Bewurzelungsstation und Bewurzeln lassen der Stecklinge für einen vorgegebenen Zeitraum unter regelmäßiger Feuchtigkeitsbenebelung,
- kurz vor oder nach Ablauf der vorgegebenen Bewurzelungszeitdauer, Abschneiden der unten aus dem Trägerstreifen herausstehenden Wurzeln, und
- Versenden des Trägerstreifens mit den bewurzelten Stecklingen zur Weiterverarbeitung oder Vereinzeln des Trägerstreifens in Abschnitte mit je zumindest einem bewurzelten Steckling und Versenden der Abschnitte zur Weiterverarbeitung.

Wenn wie zuvor beschrieben vor dem Schritt des Versendens die Klimamembran entfernt und unten aus dem Trägerstreifen herausstehende Wurzeln abgeschnitten werden, dann wird gemäß einer bevorzugten Ausführungsform des Verfahrens danach eine neue Klimamembran in gleicher Weise wie zuvor an jedem Trägerstreifen angebracht. Vorzugsweise ist diese neue Klimamembran mit einer Düngemittellösung getränkt. Die neue Klimamembran schützt während des Transports zum Kunden die Wurzeln und unterstützt durch die Düngemittellösung weiteres Wurzelwachstum und weitere Wurzelverzweigung, was beim Kunden zu einem noch zuverlässiger transplantierbaren Produkt führt. Bei einer besonders bevorzugten Ausgestaltung des Verfahrens findet vor dem Anbringen der neuen Klimamembran eine Behandlung der Stecklingswurzeln mit einem Pflanzenstärkungsmittel statt, wodurch die beschriebenen vorteilhaften Effekte weiter verstärkt werden.

Im Rahmen experimenteller Versuche wurden gute Erfahrungen mit Klimamembranen gemacht, die eine Luftdurchlässigkeit im Bereich von 1.100 bis 1.200 l/m²s aufwiesen. Ferner hat es sich als vorteilhaft erwiesen, dass die Klimamembran eine Zugfestigkeit von 13,0N bis 16,0N/15mm in Maschinenrichtung (bezogen auf den Prozess der Papierherstellung) und von 7,0N bis 9,5N/15mm quer zur Maschinenrichtung (wiederum bezogen auf den Papierherstellungsprozess) haben. Bei einer Klimamembran, mit der besonders gute Ergebnisse erzielt wurden, handelte es sich um ein Produkt der dänischen Firma Ellepot mit der Bezeichnung "20-70-1400-VP Brown FSC^{®}" mit der Unterbezeichnung "FSC Mix NC-COC-016680".

Allgemein sind Klimamembranen mit dunkler Farbe zu bevorzugen, weil dadurch verhindert wird, dass Licht die Stecklingsbasen erreicht, welches das Wurzelwachstum verlangsamt.

Zusammenfassend wird die Möglichkeit bereitgestellt, die Kosten der Aufzucht von Stecklingen zu senken, indem mit weniger Arbeitsschritten Stecklinge erhalten werden, die vom Kunden (insbesondere von Fertigwareproduzenten) unmittelbar in diejenigen Behälter umgesetzt werden können, in denen die Pflanzen dann in den Verkauf gelangen. Dadurch wird die Aufzuchtzeit im Mittel um drei Wochen verkürzt, wodurch auch der beim Fertigwareproduzenten für den Vermehrungsprozess notwendige Flächenbedarf verringert wird.

Im Folgenden wird ein Ausführungsbeispiel des Verfahrens genauer beschrieben. Bewurzelt werden sollen Stecklinge der Sorte Gaura Lindheimerii Belleza^{®} Dark Pink. Hierzu wurden unbewurzelte Stecklinge zunächst in Trägerstreifen vom Typ Visser AutoStix^{™} eingesetzt, wobei darauf geachtet wurde, dass die unbewurzelten Stecklinge hinsichtlich Größe und Reife gleichmäßig waren.

Die solchermaßen mit unbewurzelten Stecklingen bestückten Trägerstreifen wurden sodann für sechs Stunden in eine 30 ppm IBA Hormonlösung solchermaßen eingetaucht, dass die Stecklingsbasen untergetaucht waren. Um eine Austrocknung der Stecklinge zu vermeiden, fand während der Behandlung mit der Hormonlösung eine regelmäßige Feuchtigkeitsbenebelung statt.

Unmittelbar nach Ablauf der Hormonbehandlung wurde eine Klimamembran mit der Bezeichnung 20-70-1400-VP Brown FSC^{®} der dänischen Firma Ellepot um den Bereich jedes Trägerstreifens herum gelegt, in dem sich die Stecklingsbasen befinden. Die verwendete Klimamembran wies ein Flüssigkeitsaufnahmevermögen von ca. 340 g pro 100 g trockener Klimamembran auf. Die streifenförmige Klimamembran wurde dazu V-förmig gefaltet, dann von unten auf den Trägerstreifen geschoben und schließlich am Trägerstreifen befestigt, indem die beiden Längsenden der streifenförmigen Klimamembran zusammengetackert wurden. An den Stecklingsbasen befindliche Hormonlösung wird von der Klimamembran aufgesaugt und dadurch nahe den Stecklingsbasen zwischengespeichert. Die verwendete Klimamembran sorgt dafür, dass das Mikroklima um die Stecklingsbasen herum in einem optimalen Bereich zur gleichmäßigen Kallusierung und Wurzelbildung gehalten wird.

Die mit der Klimamembran versehenen Trägerstreifen wurden sodann für einen Zeitraum von drei Wochen in einer Bewurzelungsstation in Bewurzelungsbehältern gehalten, um den Bewurzelungsprozess stattfinden zu lassen. Die Bewurzelungsstation ist ein Bereich mit geregelter Temperatur und kontrollierter Licht- und Feuchtigkeitszufuhr. Die Feuchtigkeitszufuhr fand mittels Feuchtigkeitsbenebelung statt, wobei dem Feuchtigkeitsnebel ein Düngemittel zugesetzt war (Dünger mit einem EC von 1,8). Die Feuchtigkeitsbenebelung fand zu Beginn in Intervallen von zehn Sekunden alle zehn Minuten statt. Während der ersten zwei Wochen wurden die Intervalle schrittweise erhöht, bis die Stecklinge hart genug waren und die Benebelung abgestellt werden konnte. Eine Woche vor dem Ende des Bewurzelungszeitraums wurden die Stecklinge manuell mittels Scheren entspitzt. Am Ende des Bewurzelungszeitraums, d. h. wenige Tage vor einem Versand, wurden die Stecklinge einer Waschung mit Mykorrhiza unterzogen, um eine Wurzelverzweigung und Dauerhaftigkeit der Stecklinge zu fördern. Am Tag vor einem Versand fand ferner eine präventive Behandlung der Stecklinge mit einem Breitspektrum-Pilzmittel statt.

Nach Beendigung des Bewurzelungszeitraums wurden die in den Trägerstreifen befindlichen, nunmehr bewurzelten Stecklinge zum Versand vorbereitet. Hierzu wurde zunächst die Klimamembran abgenommen und die nach unten aus dem Trägerstreifen herausstehenden Wurzeln wurden abgeschnitten. Ein solches Zurückschneiden ist erforderlich, damit die mit den Stecklingen bestückten Trägerstreifen beim Kunden (häufig ein Fertigwareproduzent) maschinell weiterverarbeitet werden können. Jedoch führt die Wurzelrückschneidung auch dazu, dass während des Transports eine neuerliche und schnelle Wurzelverzweigung und Haarwurzelbildung an den Stecklingsbasen stattfindet. Um diese erneute Wurzelverzweigung und Haarwurzelbildung zu unterstützen, wurde nach dem Zurückschneiden der Wurzeln eine neue Klimamembran auf dieselbe Weise wie zuvor beschrieben an jedem Trägerstreifen angebracht. Diese neue Klimamembran wurde zuvor in eine Düngemittellösung und eine Pflanzenstärkungsmittellösung eingetaucht. Das sich somit während des Transportzeitraums um die Stecklingsbasen herum einstellende Mikroklima ist einer erneuten Wurzelverzweigung und Haarwurzelbildung im Bereich der Wurzelansätze äußerst förderlich.

Die solchermaßen mit einer neuen Klimamembran versehenen Trägerstreifen können dann rundherum mit feuchtem Papier umgeben und in vorgesehenen Transportbehältern platziert werden. Beim Kunden wird die Klimamembran vor einer maschinellen Weiterverarbeitung der mit den bewurzelten Stecklingen versehenen Trägerstreifen abgenommen.

## Patentansprüche

1. Trägerstreifen zur substratlosen gemeinsamen Bewurzelung einer Vielzahl unbewurzelter Stecklinge umfassend
(i) einen Trägerstreifen mit einer Vielzahl oben offener Kavitäten zur Aufnahme jeweils eines unbewurzelten Stecklings in jeder Kavität, wobei jede Kavität zumindest in einem einer Stecklingsbasis zugeordneten Bereich mit Öffnungen versehen ist,
(ii) einen unbewurzelten Steckling in jeder Kavität,
**dadurch gekennzeichnet, dass** eine wasserfeste, wasser- und luftdurchlässige Klimamembran an dem mit den Stecklingen versehenen Trägerstreifen solchermaßen angebracht ist, dass zumindest der der Stecklingsbasis zugeordnete Bereich jeder Kavität des Trägerstreifens von der Klimamembran umschlossen ist.

2. Trägerstreifen nach Anspruch 1, **dadurch gekennzeichnet, dass** die Klimamembran mit einer Düngemittellösung getränkt ist.

3. Trägerstreifen nach Anspruch 1 oder 2, **dadurch gekennzeichnet, dass** die Klimamembran eine Zugfestigkeit von 13,0 N bis 16,0 N/15mm in Maschinenrichtung und von 7,0 N bis 9,5 N/15mm quer zur Maschinenrichtung aufweist.

4. Trägerstreifen nach einem der vorhergehenden Ansprühe, **dadurch gekennzeichnet, dass** die Klimamembran eine Luftdurchlässigkeit im Bereich von 1100 bis 1200 l/m²s aufweist.

5. Trägerstreifen nach einem der vorhergehenden Ansprüche, **dadurch gekennzeichnet, dass** die Klimamembran pro 100 g Trockengewicht der Klimamembran ein Flüssigkeitsaufnahmevermögen von mindestens 100 g Flüssigkeit, vorzugsweise von mindestens 200 g Flüssigkeit und besonders bevorzugt von mindestens 300 g Flüssigkeit hat.

6. Trägerstreifen nach einem der vorhergehenden Ansprüche, **dadurch gekennzeichnet, dass** die Klimamembran streifenförmig ist.

7. Trägerstreifen nach Anspruch 6, **dadurch gekennzeichnet, dass** die Klimamembran vor dem Anbringen an dem Trägerstreifen V-förmig gefaltet und von unten auf den Trägerstreifen aufgeschoben ist.

## Claims

1. A carrier strip for substrate-free joint rooting of a plurality of unrooted cuttings, comprising
(i) a carrier strip having a plurality of cavities which are open at the top for receiving an unrooted cutting in each cavity, each cavity being provided with openings at least in a region associated with a cutting base,
(ii) an unrooted cutting in each cavity,
**characterized in that** a water-resistant, water- and air-permeable climate membrane is attached to the carrier strip provided with the cuttings such that at least the region of each cavity of the carrier strip that is associated with the cutting base is enclosed by the climate membrane.

2. A carrier strip according to claim 1, **characterized in that** the climate membrane is impregnated with a fertilizer solution.

3. A carrier strip according to claim 1 or 2, **characterized in that** the climate membrane has a tensile strength of 13.0 N to 16.0 N/15mm in the machine direction and of 7.0 N to 9.5 N/15mm transverse to the machine direction.

4. Carrier strip according to one of the preceding claims, **characterized in that** the climate membrane has an air permeability in the range from 1100 to 1200 l/m²s.

5. Carrier strip according to one of the preceding claims, **characterized in that** the climate membrane has a liquid-absorbing capacity of at least 100 g liquid, preferably of at least 200 g liquid and particularly preferably of at least 300 g liquid, per 100 g dry weight of the climate membrane.

6. Carrier strip according to one of the preceding claims, **characterized in that** the climate membrane is strip-shaped.

7. Carrier strip according to claim 6, **characterized in that** the climate membrane is folded into a V-shape before being attached to the carrier strip and is pushed onto the carrier strip from below.

## Revendications

1. Bande de support pour l'enracinement commun sans substrat d'une pluralité de boutures sans racine, comprenant
(i) une bande support dotée d'une pluralité de cavités ouvertes vers le haut pour recevoir respectivement dans chaque cavité une bouture sans racine, chaque cavité étant pourvue d'ouvertures au moins dans une zone associée à une base de bouture,
(ii) une bouture sans racine dans chaque cavité,
**caractérisée en ce qu'**une membrane climatique résistante à l'eau, perméable à l'air et à l'eau est posée sur la bande de support pourvue de la bouture de manière à ce qu'au moins la zone associée à la base de bouture de chaque cavité de la bande de support soit entourée par la membrane climatique.

2. Bande de support selon la revendication 1, **caractérisée en ce que** la membrane climatique est imprégnée d'une solution fertilisante.

3. Bande de support selon la revendication 1 ou 2, **caractérisée en ce que** la membrane climatique présente une résistance à la traction comprise entre 13,0 N et 16,0 N/15 mm dans le sens de la machine et comprise entre 7,0 N et 9,5 N/15 mm transversalement au sens de la machine.

4. Bande de support selon l'une quelconque des revendications précédentes, **caractérisée en ce que** la membrane climatique présente une perméabilité à l'air comprise dans la plage entre 1100 et 1200 l/m²s.

5. Bande de support selon l'une quelconque des revendications précédentes, **caractérisée en ce que** la membrane climatique pour chaque 100 g de poids sec de la membrane climatique possède un pouvoir de rétention de liquide d'au moins 100 g de liquide, de préférence d'au moins 200 g de liquide et tout particulièrement d'au moins 300 g de liquide.

6. Bande de support selon l'une quelconque des revendications précédentes, **caractérisée en ce que** la membrane climatique se présente sous forme de bande.

7. Bande de support selon la revendication 6, **caractérisée en ce que** la membrane climatique avant la pose sur la bande de support, est pliée en V et ensuite remise depuis le bas sur la bande de support.
